# EUROPEAN PATENT APPLICATION

(11) **EP 4 386 678 A1**
(43) Date of publication of application: **19.06.2024**
(21) Application number: 22213339.9
(22) Date of filing: 14.12.2022
(51) Int. Cl.: G06T 9/00, G06T 15/00

(54) **NOVEL VIEW GENERATION USING POINT CLOUDS**

(71) Applicant: Koninklijke Philips N.V., 5656 AG Eindhoven (NL)
(72) Inventor: KROON, Bart, 5656AG Eindhoven (NL); VAREKAMP, Christiaan, 5656AG Eindhoven (NL)
(74) Representative: Philips Intellectual Property & Standards

(57) **Abstract**

A method of generating a view of a scene at a target viewpoint for immersive video. The method comprises receiving an image of the scene and a point cloud of the scene at a point cloud viewpoint and obtaining connectivity information between points in the point cloud. A geometry of the scene is interpolated using the point cloud and the connectivity information and the view of scene is rendered at the target viewpoint using the image and the interpolated geometry.

## Description

### FIELD OF THE INVENTION

This invention relates to the generation of novel views at target viewpoints with the use of point clouds as the depth information.

### BACKGROUND OF THE INVENTION

Immersive video is video that is played-back for example on a virtual reality, VR, headset. The viewer has freedom to look around and move around - though limited - through the scene. It is also referred to as Free View, 6-degrees-of-freedom (6DoF) or 3DoF+.

An immersive video system typically involves multi-view video cameras that capture a 3D-scene from various viewpoints. The captured videos are provided with captured or estimated depth-maps that allow re-projecting scene elements to other (virtual) camera viewpoints instead of relying on the viewpoints of the cameras. Multi-view imaging thus involves imaging of a scene together with obtaining a geometry of the scene captured with a depth map or similar.

Rendering from a coded multi-view representation is challenging because of a limited precision of the geometry information and a variable number of samples that map on each scene point. The 3D reconstruction to enable the generation of images from virtual viewpoints typically takes place using processes such as multi-view calibration, depth estimation, image filtering, consistency checks, etc. together with coding techniques such as pixel pruning and patch packing. These processing requirements result in a complex encoder that requires significant compute and memory resources and induces latency.

The requirements on latency and on the complexity of the processing will depend on the particular application. Thus, in some applications a lower complexity encoder is desired with reduced latency (but potentially reduced image quality) whereas in other applications increased complexity and latency can be tolerated for improved image quality.

There remains however a need for a low complexity and/or low latency image processing solution for the encoder and/or the decoder.

### SUMMARY OF THE INVENTION

The invention is defined by the claims.

According to examples in accordance with an aspect of the invention, there is provided a method of generating a view of a scene at a target viewpoint for immersive video, the method comprising:
receiving an image of the scene and a point cloud of the scene at a point cloud viewpoint;
obtaining connectivity information between points in the point cloud;
interpolating a geometry of the scene using the point cloud and the connectivity information; and
rendering the view of scene at the target viewpoint using the image and the interpolated geometry.

Obtaining the connectivity information may comprise receiving the connectivity information and/or determining/estimating the connectivity information.

Of course, more than one image be received (e.g., two or more). Typically, in immersive/multi-view video, more than one image will be received and the color/texture of the images can be blended (where appropriate) to render the view. Further, more than one point cloud can be received.

Point clouds typically provide sparse depth information of a scene and are thus generally not particularly suitable for multi-view imaging because they cannot generally provide both high pixel spatial resolution and acceptable temporal resolution. However, because of the sparse nature of point clouds (e.g., as obtained from LiDAR), they provide a low bit-rate solution for providing depth information through a bitstream.

As such, it is proposed to interpolate a geometry of the scene from the point cloud using connectivity information. The connectivity information provides a geometric relationship between points of the point cloud (e.g., points corresponding to a same surface etc.). This enables a more accurate interpolation of the geometry of the scene. In other words, the method provides a relatively accurate spare to dense geometry interpolation at the decoder/client side.

In general, the connectivity information is indicative of a spatial relationship between the points in the point cloud.

Obtaining connectivity information may comprise receiving or estimating one or more subsets of related points in the point cloud, wherein each subset of related points is indicative of points corresponding to a surface in the scene.

Interpolating the geometry of the scene may comprise connecting the related points in one or more of the subsets of related points.

Interpolating a geometry of the scene may comprise determining a geometric primitive for one or more of the points in the point cloud.

The connectivity information may comprise a primitive size indicative of the size of the geometric primitive to be determined.

In this case, the primitive size can be determined at the encoder and included in the bitstream (at a relatively small data cost) to improve the interpolation.

The method may further comprise generating a temporally up-sampled point cloud using the point cloud.

Generating the temporally up-sampled point cloud may comprise receiving motion data of points in the point cloud and using the motion data to generate temporally up-sampled points for the temporally up-sampled point cloud.

The method may further comprise receiving sub-frame timings for the points in the point cloud, wherein the point cloud is adapted based on the sub-frame timings and/or rendering the view of the scene is based on the sub-frame timings.

Points in a point cloud may be obtained at slightly different times. This occurs, for example, when using LiDAR to obtain the point cloud. The sub-frame timings provide information as to the difference in when the points were obtained. Thus, the sub-frame timings can be taken into consideration when rendering the view.

A decoder system may also be provided comprising a processor configured to perform any of the afore-mentioned steps for generating a view of a scene at a target viewpoint for immersive video.

The invention also provides a method of encoding for immersive video, the method comprising:
obtaining an image of the scene;
obtaining a point cloud of the scene at a point cloud viewpoint;
determining connectivity information between points in the point cloud; and
encoding the image, the point cloud and the connectivity information.

Preferably, two or more images of the scene are obtained at different viewpoints.

The point cloud may be obtained from LiDAR.

Determining connectivity information may comprise applying a first geometric primitive, at a first primitive size, to the points in the point cloud, performing a consistency check of the first primitive size using the two images, applying a second geometric primitive, at a second primitive size, to the points in the point cloud, performing a consistency check of the second primitive size using the two images and encoding either the first primitive size or the second primitive size based on the consistency checks of both the first and second primitive sizes, wherein the largest of the first and second primitive sizes is preferentially encoded.

In one example, the first geometric primitive and/or the second geometric primitive are regions of pixels and applying the geometric primitives means selecting the region of pixels. In this example, the primitive sizes are the sizes of the pixel regions (e.g., 2x2, 4x4, 2x4 etc.).

The consistency check generally involves comparing the pixel values in the geometric primitives (e.g., the pixel regions). For example, the sum of color differences between pixels can be calculated.

Of course, consistency checks can be performed on more than two primitive sizes.

Determining connectivity information may comprise comparing pixel colors in the two images at positions corresponding to the points in the point cloud and determining one or more subsets of related points in the point cloud based on the pixel color comparison.

The method may further comprise comparing pixel colors in the two images using the point cloud and determine an indication of visibility for each point in the point cloud, wherein the indication of visibility comprises a view visibility for each of the two image viewpoints.

In other words, the indication of visibility provides information on which images can be used when blending the texture at each point in the point cloud.

The method may further comprise determining motion data between the point cloud and a previous point cloud of the scene and encoding the motion data.

The motion information can thus be used by a decoder to temporally up-sample the point clouds received over time.

The method may further comprise determining tolerance information indicative of a registration error between the points in the point cloud and the two images and encoding the tolerance information.

The tolerance information may include an average error and a maximum error. In one example, the average error may be below 2 pixels, and the maximum error may be below 10 pixels. In another example, the average error is less than 1 pixel, and preferably less than 0.5 pixels, and the maximum error is below 2 pixels.

The invention also provides a computer program carrier comprising computer program code means which, when executed a processing system, cause the processing system to perform all of the steps of the method of generating a view of a scene and/or the encoding method.

The computer program carrier may be a relatively long-term data storage solution (e.g., a hard drive, a solid state drive etc.). Alternatively, the computer program carrier may be a data transmission medium such as a bitstream.

The invention also provides a system for generating a view of a scene at a target viewpoint in immersive video, the system comprising processor configure to:
receive an image of the scene and a point cloud of the scene at a point cloud viewpoint;
obtain connectivity information between points in the point cloud;
interpolate a geometry of the scene using the point cloud and the connectivity information; and
render the view of scene at the target viewpoint using the image and the interpolated geometry.

The invention also provides a system for encoding for immersive video, the system comprising a processor configured to:
obtain an image of the scene;
obtain a point cloud of the scene at a point cloud viewpoint;
determine connectivity information between points in the point cloud; and
encode the image, the point cloud and the connectivity information.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an object being images by three cameras and a laser system;
Fig. 2 shows the position of four points from a point cloud relative to the positions of two image viewpoints;
Fig. 3 illustrates an example of temporal up-sampling for the points in the point cloud; and
Fig. 4 shows a method for rendering a view at a target viewpoint.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method of generating a view of a scene at a target viewpoint for immersive video. The method comprises receiving an image of the scene and a point cloud of the scene at a point cloud viewpoint and obtaining connectivity information between points in the point cloud. A geometry of the scene is interpolated using the point cloud and the connectivity information and the view of scene is rendered at the target viewpoint using the image and the interpolated geometry.

Conventional multi-view data consist of video data from individual capture cameras optionally combined into a single video atlas. Conventional point cloud data consist of points captured, for example, by a laser system such a LiDAR.

LiDAR is a laser-scanning instrument that measures the distance and intensity of one or more reflections in the path of the laser, for multiple scan directions of the laser. There may for instance be 128 longitudes and 64 latitudes. One full pass of the laser may be called a frame, and a typical frame rate is 20 Hz.

Assuming synchronization and cross calibration of the multi-view video data with the point cloud, a novel view synthesizer could include the steps of selecting a target viewpoint to render a novel view, projecting the point cloud into the target viewpoint and, for a pixel in the target viewpoint that has a valid depth value, calculating a mapping to the two nearest views in the set of multi-view camera images. The color from the nearest views could thus be retrieved and blended at the target viewpoint.

The above novel view synthesizer could be suitable in the context of live streaming as processing at both the encoder side and, after decoding, at render time is very limited.

However, the image quality is likely limited because projecting occluded points in the point cloud to the target view would result in wrong depth values and hence the retrieval of wrong color values from the images in the multi-view data. Additionally, since the point cloud spatial scan resolution is typically much lower than the size of an image from the multi-view dataset, the depth map in the target view will have a low resolution which may result in wrong color values. Further, viewpoint differences between the laser (for obtaining the point cloud) and the multi-view camera rig will leave holes in the depth map of the target view.

One solution for solving holes and occlusion problems is to render a point not just by rasterizing that point at a given output resolution but by attaching a geometric primitive to a subset of the points and synthesize the attached geometric primitive.

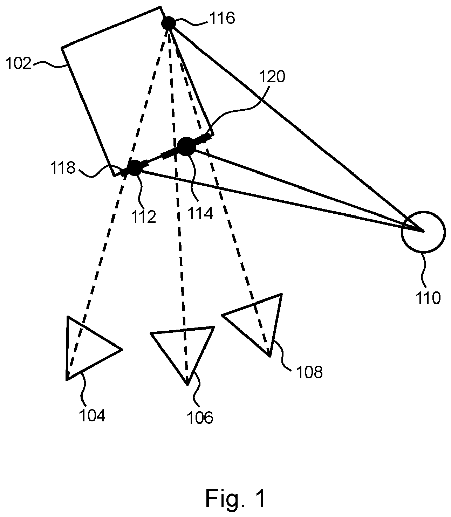

Fig. 1 shows an object 102 being images by three cameras 104, 106 and 108 and a laser system 110. The cameras 104, 106 and 108 each obtain images of the objects 102 at different image viewpoints and the laser system 110 obtains a point cloud for the object 102.

In this example, points 112, 114 and 116 correspond to points in a point cloud obtained by the laser system. Points 112, 114 and 116 are directly visible to the laser system 110. However, due to differences in the viewpoints of the laser system 110 and the cameras 104, 106 and 108, some points in point cloud may not be directly visible by the cameras 104, 106 or 108. In this case, points 112 and 114 are visible by all three cameras 104, 106 and 108 whilst point 116 cannot be directly seen by any of the three cameras 104, 106 or 108. In other words, point 116 is occluded from the viewpoints of the cameras.

However, when synthesizing a novel view using point 116, the colors fetched from the images (obtained from cameras 104, 106 and/or 108) will not correspond to the real color of point 116 and, instead, correspond to the color of the visible surface, to the cameras, on which points 112 and 114 lie.

As such, this solution proposes the application of geometric primitives 118 and 114 to the points (e.g., points 112 and 114). In this case, the geometric primitives 118 and 120 are mini meshes forming a solid black line Thus, the depth of the geometric primitives 118 and 120, now covering most of the visible surface to the cameras, will cover the occluded point 116 such that no color should be applied to point 116 from cameras 104, 106 or 108. As such, the geometric primitives 118 and 120 ensure point 116 is correctly occluded.

The geometric primitive may be pre-defined and constant in shape over the points. It may be a single triangle with a point at its center or it may be a mini mesh consisting of more than one triangle. The idea is that it locally models the geometry of the surface around the laser captured point. It may also be advantageous to specify, per point, how a reference primitive should be scaled, rotated and/or shifted during the generation of the geometry of the scene at the target view.

In order to generate metadata for the point cloud, each point in the point cloud can be projected to all image viewpoints before encoding. A multi-view consistency check can thus be performed over the views at different spatial scales (e.g., three distinct block sizes). Rectangular pixel regions (blocks) of pixels (e.g., 2x2, 4x4, 8x8, 16x16) can be used in a consistency check where the sum of absolute color difference over the block from a source view to a neighbor view is a measure of correspondence. The lower the summed absolute difference the higher the correspondence. The maximum block size, that is still consistent according to the multi view match error over a minimum fraction of all views (e.g., for at least half of all views) is then selected. The selected block size can thus be used to calculate the geometric primitive (e.g., mesh) size in world space using the depth in one or multiple views. If a relatively large block of pixel data is consistent, then it can locally represent a large geometric primitive. This situation will typically occur away from disocclusion edges. Note that blocks do not necessarily need to align with a block grid, i.e., shifted blocks can be tested for multiple shifts relative to their grid position such that can be selected to describe the geometry close to the actual object boundary (depth transition).

As can be seen in Fig. 1, the laser system 110 may record the position of points that are only visible in a subset of all views. Thus, visibility bits can be added to each of the points for each source view. For example, a simple coding for a total of eight views would result in an eight-bit number per point indicating, per view, whether the point is visible or not. This visibility information can be obtained before encoding by comparing pixel colors over views via the projection of the points to each view. Outlier color values can be detected, and the corresponding views can be set to not visible. The client-side rendering stays efficient by using the visibility bits to let the blend operation only use visible views for a given point.

An alternative to the idea of adding a geometric primitive to a point for the purpose of rendering is to connect points (i.e., defining edges between points). For example, if, via projection and color comparison over views, it is found that two points have similar color statistics over the views, it can be deduced that the points lie on the same surface. Moreover, it can be assumed that this surface is a planar 3D surface and, therefore, points that lie on the connecting line will also lie on this surface.

It can be indicated, for a point pair, that they are end points of the line and send this information with the point cloud. The client-side renderer could then draw a line between the points with a given thickness. Similarly, for a triple of points, the connections between the points can create a triangle and send this information as meta data. If a triangle (or line, or other shape) is defined for a set of points, the triangle could be rendered instead of all the points being rendered separately.

As such, using the knowledge of the object surface color of the points in the point cloud, the sparse point cloud of the scene can be converted to a dense geometry of the scene.

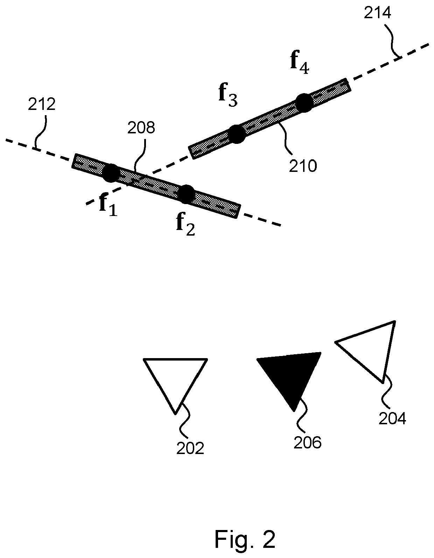

Fig. 2 shows the position of four points from a point cloud relative to the positions of two image viewpoints 202 and 204. Each point has an associated feature vector [***f***₁, ***f***₂, ***f***₃, ***f***₄], for instance containing color and/or texture that is representative of the surface being imaged. During rendering of a novel view, the points can be first warped to the two source views 202 and 204 where a pixel-accurate segmentation can be performed (lines 208 and 210) and a geometric model (lines 212 and 214) can be fitted for each of the segments 208 and 210. Using the fitted geometries (e.g., planar surfaces), a per pixel depth can be mapped resulting in a dense depth map per view. These resulting depth maps can then be used to warp the source view textures to a target view 206 and combined. Using an alternative render method, the depth maps themselves are first warped to the target view and based on the warped depths, the texture data are then retrieved from the source views and blended.

The per point feature vectors can be determined before encoding by analyzing color consistency over views. The most frequent color/texture vector over the views can be assigned to the point.

A LiDAR typically poses a trade-off between spatial resolution and temporal capture frequency. Practically, this means that, for a useful spatial resolution, the temporal resolution is typically around 10 Hz per point. Moreover, due to the scanning process, each point has its own time stamp. With static geometry this would not be a problem. However, since objects typically move, it would be preferable to up-sample the point cloud to the typical video frame rate of 30Hz or even 60Hz. Doing this at the client side is also preferable since exploding the point cloud before encoding would considerably increase the bit rate.

A first realization is that providing the point cloud ahead of video frame time will allow time for the spatial interpolation during point cloud temporal up-sampling. A second realization is that keeping a spatial data structure that stores points over time would help in a fast lookup for nearby points with a different time stamp.

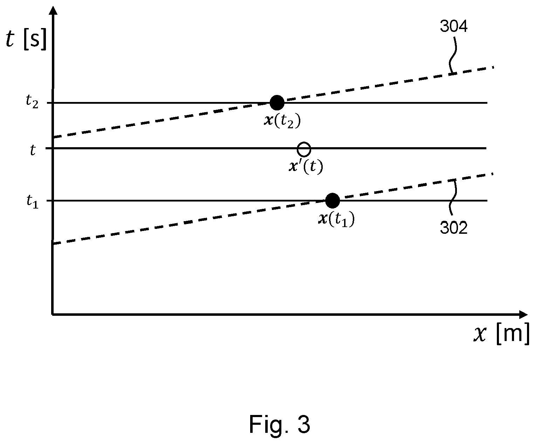

Fig. 3 illustrates an example of temporal up-sampling for the points in the point cloud. Using a temporal sliding window of the two closest LiDAR scans, relative to the video frame time, guarantees that point position interpolation can be achieved. A first interpolation method may be to determine, for each point in the most recent LiDAR scan, the closest point in the previous most recent LiDAR scan. Using the relative time of both points with respect to the video frame time, and assuming linear motion, allows for a linear interpolation.

The point cloud includes scene points ***x***(*t*₁) and ***x***(*t*₂) for video frame pixels at times *t*₁ and *t*₂, and for laser reflectance lines 302 and 304 respectively, as a function of a spatial coordinate. The scanning operation of the laser introduces a correlation between capture time and spatial position. By sending the point cloud data ahead of the video frame images, the positions of points in the point cloud can be interpolated to the video frame capture time.

In particular, interpolation of a point ***x***'(*t*) at time *t* can be achieved by assuming linear motion between a closest point ***x***(*t*₁), at time *t*₁, and a closest point ***x***(*t*₂), at time *t*₂.

An alternative approach could be to determine motion vectors per point, before encoding, and send the motion vectors as metadata with the point clouds. This may be combined with the idea of having connected points because the motion vector may specify the combined motion of a subset of points. This may be advantageous as it will require a lower bitrate to transmit the motion information.

It will be appreciated that, in order to render a view at a target viewpoint, projection information is used to enable projection of a point of the point cloud to the projection plane of a view. More generally, the projection information provides information of the relative positions/poses between the viewpoints of images and the viewpoint of the point cloud.

The projection information can include view intrinsic parameters (such as projection model, principal point, focal length and lens distortion parameters), view extrinsic parameters (position and orientation = pose), projection plane size (relation between image and view coordinates if not identical), point cloud extrinsic parameters (position and orientation = pose) and/or point cloud scale/range parameters (relating code points to distances in scene units).

It should be understood that there are multiple known representations for view parameters and point cloud parameters including using matrices and different representations of positions and orientations.

By associating extrinsic parameters with views and point cloud(s), there is a scene coordinate space in which both are placed. This scene coordinate system may have semantics for the axis directions such as "forward", "left", "up" that are useful for rendering. (In MIV the definition can be specified using the coordinate axis system SEI message.)

Alternatively, the reference frame of a point cloud is the scene reference frame, and the extrinsic parameters map to the point cloud. When there are multiple views and one point cloud, then this can be a logical representation.

Alternatively, one of the (synthetic) views is a 360-degree or ultra-wide angle view, in-painted view, or an environment map, and the extrinsic parameters map the other views and point clouds to this one.

The skilled person will be aware of the various types of projection information, how to use them and which ones are needed in various situations.

A method of rendering a view at a target viewpoint is to warp/project the depth data (point cloud in this case) to the target viewpoint, fetch the pixel texture values (e.g., color and transparency) from the images to the points in the point cloud and blend the pixel texture values for each point. In order to achieve the warping/projecting of the point cloud and the fetching of the pixel texture colors, the projection information is used.

In one embodiment of the invention, the registration between a point in the point cloud and a corresponding image sample in the coded image may be accurate up to a few pixels. For instance, the average error may be below 2 pixels, and the maximum error is below 10 pixels. The maximum error is expected to be towards the edges of the projection planes of the views.

The benefit of allowing such a wide tolerance is that it becomes easier to set-up a camera system and capture a scene. However, because the misalignment may cause ghosting when combining multiple image regions for a region of a viewport, it is preferred that the decoder or renderer performs an image registration step for the viewport.

In another embodiment of the invention, the registration is accurate up to less than 0.5 pixels, and the maximum error is below 2 pixels. The benefit of requiring such a narrow tolerance is that the decoder or renderer do not have to perform an image registration step for the viewport, and this reduces the processing resource requirement.

To enable making this decision, in a preferred embodiment of the invention, the bitstream comprises tolerance information, and the renderer selects a rendering strategy based on this tolerance information. Examples of tolerance information may be one or a combination of a flag for low or high tolerance, average image sample projection error, maximum image sample projection error and/or a map providing different values for more central and more outward positions in a projection plane.

For larger camera systems, multiple LiDAR's may be used, and each LiDAR may form a group with the nearest 2D cameras. More generally, multiple point clouds can be obtained, where each point cloud corresponds to a group of images. Each such group can be independently encoded and the bitstreams can be merged. Sub-bitstream access is possible to extract a subset of the groups. Group-based coding of Multiview + depth is known in MIV.

In order to improve rendering of multiple groups, extrinsic parameters within and between groups can be provided. Additionally, different tolerances can be provided within and between the groups. Also, different temporal coherence can be allowed within and between groups.

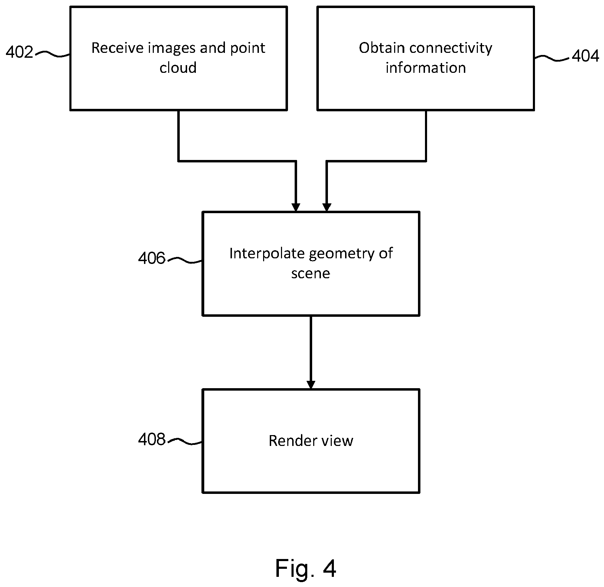

Fig. 4 shows a method for rendering a view at a target viewpoint. At step 402, images and a point cloud are received for a scene. For example, step 402 may include receiving a coded representation of an attribute of at least a first and second image region (at different image viewpoints), receiving a coded point cloud, receiving projection information, receiving viewport parameters and decoding all or a part of the received information.

At step 404, connectivity information of the points in the point cloud is obtained. The connectivity information can be received (e.g., with the coded images and point cloud) or can be estimated/determined by the client. For example, the connectivity information can include sub-sets of points in the point cloud which correspond to a surface.

The connectivity information is used to interpolate a geometry of the scene at step 406. Using the geometry of the scene, a view is rendered at the target viewpoint in step 408. Step 408 may include projecting points of the decoded point cloud to the target viewport, projecting the points in the point cloud to positions of the decoded image and rendering said positions to form a viewport image.

It will be appreciated that the images and point cloud have a temporal relation.

It will also be appreciated that the projection information enable the projection of a point of the point cloud to a corresponding image sample, within a tolerance.

As such, the method is capable of forming a dense viewport image based on sparse point cloud data by interpolating geometry information and fetching attribute information.

Preferably, a tolerance is received and, when above a threshold, the method further comprises a registration refinement step to refine the registration between the point cloud and the images.

Preferably, information on the intensity of a ray reflection is received and applied in the rendering step (e.g., in an image filtering step of the rendering step) to improve the rendering of partially translucent scene elements.

Preferably, information on the number of ray reflections is received and applied in the rendering step to improve the rendering of partially translucent scene elements.

Preferably, the method further comprises receiving, rendering, etc. multiple groups, each comprising a point cloud and at least one image region of one view.

Preferably, the method further comprises receiving "deep image" point attributes that improve rendering of non-Lambertian scene elements such as color, reflectance, normal, polarization, etc. Deep image points may include additional attributes such as reflectance properties, normal vectors, transparency etc.

Preferably, the method further comprises receiving connectivity information on the relation between points of the point cloud (such as labels or edges) that further enables the rendering step to filter related points in a different way from unrelated points and/or enables the rendering of points of related points using a first approach, and unrelated points with a second approach, whereby the first approach has a lower algorithmic complexity than the second one. In other words, the connectivity information may enable different sub-sets of points to be rendered differently. For example, for a sub-set of points which defines a surface (e.g., via mini mesh), the surface can be processed as a whole instead of processing each point separately.

Optionally, the method further comprises receiving reprojection information that relates related points with image regions and instead of having view parameters and point cloud parameters.

Preferably, the method further comprises receiving motion information on a cluster of related points and rendering the cluster of points at a specified time instance (i.e., frame rate up-conversion.)

Preferably, the method further comprises receiving sub-frame timing information on the points in the point cloud, or clusters of points in the point cloud, and the rendering step further comprises compensating, to some extent, for the timing differences. This may avoid the rolling shutter effect and/or compensate for a rotating LiDAR.

Similarly, sub-frame timings for a viewport display device can be compensated for during rendering. For example, head-mounted displays, besides having a high frame rate (e.g., 120 Hz), often update the viewport while rendering such that a line n and a line n + 1, of the same frame, may correspond to a subtly different viewport position. Such sub-frame updates reduce the effective update time. These sub-frame timings can be compensated for during rendering.

Receiving the connectivity information and, for example, performing a mesh-based rendering may provide more efficient rendering of the view.

Estimating/determining the connectivity information and, for example, performing a mesh-based rendering may provide a more consistent rendering of the view.

The skilled person would be readily capable of developing a processor for carrying out any herein described method. Thus, each step of a flow chart may represent a different action performed by a processor and may be performed by a respective module of the processing processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method of generating a view of a scene at a target viewpoint for immersive video, the method comprising:
receiving (402) an image of the scene and a point cloud of the scene at a point cloud viewpoint;
obtaining (404) connectivity information between points in the point cloud;
interpolating (406) a geometry of the scene using the point cloud and the connectivity information; and
rendering (408) the view of scene at the target viewpoint using the image and the interpolated geometry.

2. The method of claim 1, wherein obtaining connectivity information comprises receiving or estimating one or more subsets of related points in the point cloud, wherein each subset of related points is indicative of points corresponding to a surface in the scene.

3. The method of claim 2, wherein interpolating the geometry of the scene comprises connecting the related points in one or more of the subsets of related points.

4. The method of any of claims 1 to 3, wherein interpolating a geometry of the scene comprises determining a geometric primitive for one or more of the points in the point cloud.

5. The method of claim 4, wherein the connectivity information comprises a primitive size indicative of the size of the geometric primitive to be determined.

6. The method of any of claims 1 to 5, further comprising generating a temporally up-sampled point cloud using the point cloud.

7. The method of any of claims 1 to 6, further comprising receiving sub-frame timings for the points in the point cloud, wherein:
the point cloud is adapted based on the sub-frame timings; and/or
rendering the view of the scene is based on the sub-frame timings.

8. A method of encoding for immersive video, the method comprising:
obtaining an image of the scene;
obtaining a point cloud of the scene at a point cloud viewpoint;
determining connectivity information between points in the point cloud; and
encoding the image, the point cloud and the connectivity information.

9. The method of claim 8, wherein determining connectivity information comprises:
applying a first geometric primitive, at a first primitive size, to the points in the point cloud;
performing a consistency check of the first primitive size using the two images;
applying a second geometric primitive, at a second primitive size, to the points in the point cloud;
performing a consistency check of the second primitive size using the two images; and
encoding either the first primitive size or the second primitive size based on the consistency checks of both the first and second primitive sizes, wherein the largest of the first and second primitive sizes is preferentially encoded.

10. The method of claims 8 or 9, wherein determining connectivity information comprises:
comparing pixel colors in the two images at positions corresponding to the points in the point cloud; and
determining one or more subsets of related points in the point cloud based on the pixel color comparison.

11. The method of any of claims 8 to 10, further comprising:
comparing pixel colors in the two images using the point cloud; and
determine an indication of visibility for each point in the point cloud, wherein the indication of visibility comprises a view visibility for each of the two image viewpoints.

12. The method of any of claims 8 to 11, further comprising determining tolerance information indicative of a registration error between the points in the point cloud and the two images and encoding the tolerance information.

13. A computer program carrier comprising computer program code means which, when executed a processing system, cause the processing system to perform all of the steps of one or more of the method according to claims 1 to 7 or the method according to claims 8 to 12.

14. A system for generating a view of a scene at a target viewpoint in immersive video, the system comprising processor configure to:
receive (402) an image of the scene and a point cloud of the scene at a point cloud viewpoint;
obtain (404) connectivity information between points in the point cloud;
interpolate (406) a geometry of the scene using the point cloud and the connectivity information; and
render (408) the view of scene at the target viewpoint using the image and the interpolated geometry.

15. A system for encoding for immersive video, the system comprising a processor configured to:
obtain an image of the scene;
obtain a point cloud of the scene at a point cloud viewpoint;
determine connectivity information between points in the point cloud; and
encode the image, the point cloud and the connectivity information.
